# EUROPEAN PATENT SPECIFICATION

(11) **EP 2 119 902 B1**
(45) Date of publication and mention of the grant of the patent: **01.01.2014**
(21) Application number: 08425340.0
(22) Date of filing: 15.05.2008
(51) Int. Cl.: F02M 35/16, B62D 33/063

(54) **Intake pipe particularly for industrial vehicles provided with tilt cab**
Eingangsrohr, insbesondere für Industriefahrzeuge mit Kippkabine
Tuyau d'entrée particulièrement pour véhicules industriels fournis avec un habitacle d'inclinaison

(43) Date of publication of application: 18.11.2009
(73) Proprietor: Iveco S.p.A., 10156 Torino (IT)
(72) Inventor: Bivona, Francesco, 10143 Torino (IT)
(74) Representative: Borsano, Corrado

(56) References cited:
- EP-A- 0 342 543
- DE-A1-102005 037 720
- FR-A- 2 078 457
- US-A- 4 378 945

## Description

This invention relates to a decoupleable intake pipe particularly for heavy industrial vehicles.

As it is known, every motor vehicle is provided with an intake pipe with the function to bring fresh air to the engine. Regardless of the kind of device that may be placed downstream such pipe, air filter, turbine, injector and so on, it is very important that the intake pipe's dimensions are adequate to the air flow rate that has to reach the engine during its functioning. For this reason, it is known that the heavy industrial vehicles, usually equipped with very bulky engines, are equipped with as much bulky intake pipes.

The large size of the intake pipe contrasts with the small space available in the engine hood of such vehicles. It is known, in fact, that the engine itself and all the other systems on board practically occupy all the available space, therefore it is not possible to place also the intake pipe in the engine hood.

Therefore at present such intake pipe is placed outside the engine hood, as is known in the art.

With particular reference to the industrial vehicles, it is known in the art to position said intake pipe at the back of the cabin, completely outside the cabin itself, as disclosed in patent documents EP-A-342543 and DE102005037720 A1.

According to such patent documents, it's described an intake suitable for being mounted inside the engine compartment of industrial vehicles with tilt cab, comprising a first segment connected to said cabin and, telescopically associated to said first segment, and at least a second segment in its turn decoupleably associated to a third segment of intake pipe connected to the vehicle frame.

This solves the problem of the dimensions of the intake pipe, and in case of tilt cab vehicles, which actually are the majority of the heavy industrial vehicles, if not all, the problem of the tilting of the cabin.

In fact, in case of an intake pipe positioned outside the cabin, there are no problems in decoupling the intake pipe in an easy way, essentially by means of a lock joint. This way the part of external pipe associated to the cabin may be tilted together with the cabin, while the part of pipe directly connected to the engine remains integral with the engine.

The positioning of such intake pipe outside the engine hood, however, presents a number of drawbacks.

A first drawback is that, this way, the intake pipe is exposed to weather, dust and dirt in general. The need to avoid that dirt, rain or other things enter the intake pipe and compromise its functioning, implies that such pipes have a very complex structure, which therefore has an expensive construction and maintenance. Therefore such intake pipes of the type known in the art are not simply the pipes extending from the intake manifold connected to the engine, but are very complex systems that have specially made means that prevent the accumulation of dirt and water.

As said, however, it is not only the limited available space in the engine hood that prevents to shelter the intake pipe from the weather, that would allow to simplify its structure with evident economic and functional advantages, but the main problem is connected to the tilting of the cabin.

In fact it is known that, because of its dimensions, if the intake pipe was placed inside the engine hood, then it would be an obstacle for the cabin tilting.

Since a part of the pipe has necessarily to be placed in correspondence of the opening in the bodywork that corresponds to the radiator or in correspondence of other specially made openings in order to allow the inlet of fresh air, the intake pipe will extend from such air intake, placed substantially in the higher part of the engine hood, to the intake manifold, connected to the engine and therefore placed in a lower part of the engine hood.

When tilting, the cabin carries out a rotational movement around the pivots that connect the cabin to the frame, but it also carries out a rototranslation movement, therefore the intake pipe tends to be deformed or compressed when the cabin rotates. The intake pipe, therefore, hampers the tilting of the cabin and at the same time is remarkably deformed, which in the long run provokes the damaging of the pipe itself.

Since it is not possible for the user to intervene manually in order to connect and disconnect the intake pipe placed inside the engine hood when the cabin is tilted, because the intake pipe is not placed in a zone accessible when the cabin is not tilted, it is not possible to apply the same concept of decoupleable pipe, that is now applied for the use outside the cabin, and realize by this decoupling system a pipe to be placed inside the engine hood.

The main task of this invention is to solve the drawbacks described above.

In particular, in the scope of this task, the aim of this invention is to provide an intake pipe suitable to be placed in the engine hood of heavy industrial vehicles with tilt cab.

Also, the aim of this invention is to provide an intake pipe being easy to construct, with limited dimensions and which allows the cabin to tilt without any intervention by the user in order to connect or to disconnect the pipe.

A further aim of this invention is to provide an intake pipe equipped with system for an automatic connecting and disconnecting.

This task and these and other purposes that will be explained below are achieved by an intake pipe suitable to be mounted inside the engine hood of industrial vehicles with tilt cab, comprising at least a first segment connected to the vehicle cabin and at least a second segment suitable in its turn to be associated to a third segment of intake pipe which is connected to the frame of the vehicle, said first segment of pipe and said second segment of pipe are telescopically associated between each other and are decoupleable by said third segment of pipe; the intake pipe being characterized in that said the second segment is adapted to penetrate and slide inside said first segment of pipe; said first and second segments of pipe associated further comprising means suitable for controlling their relative sliding.

Further characteristics and advantages of the present invention will become clear from the following detailed description, that is merely illustrative and not limitative and is shown in the figures that are attached hereto, in which:
figure 1 shows an overall schematic view of the pipe according to this invention mounted on an industrial vehicle with tilt cab when the cabin is closed;
figure 2 shows a detail of the intake pipe according to this invention with tilted cab;
figures 3, 4 and 5 show respectively the same view as figure 1 wherein the intake pipe is in the configuration corresponding to the closed cabin, an intermediate configuration wherein the pipe is compressed because the cabin presses against the suspensions connecting it to the frame, and a fully compressed pipe configuration corresponding to the beginning of the tilting of the cabin;
figures 6 and 7 show respectively the intake pipe according to this invention with the cabin almost fully tilted and fully tilted.

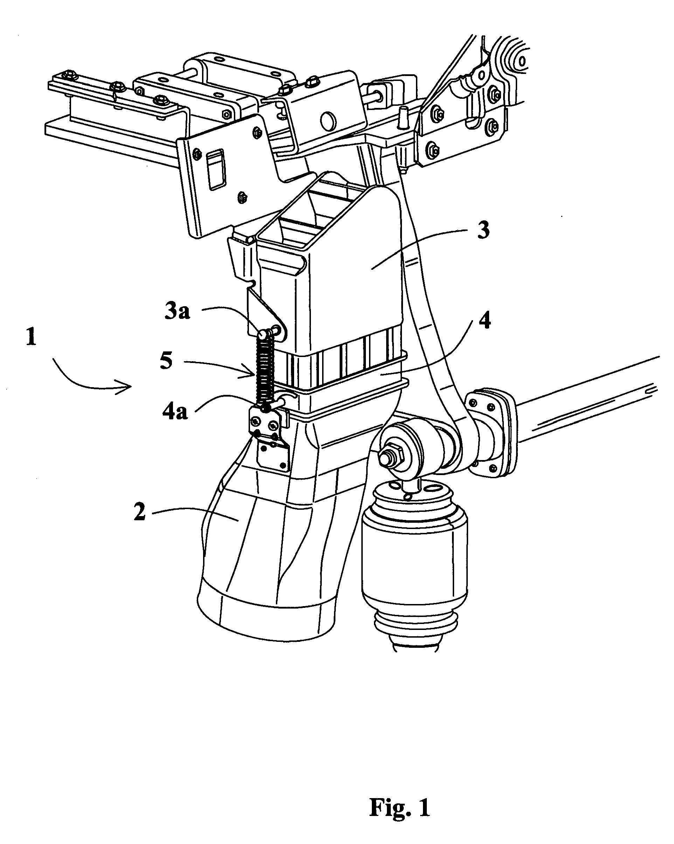

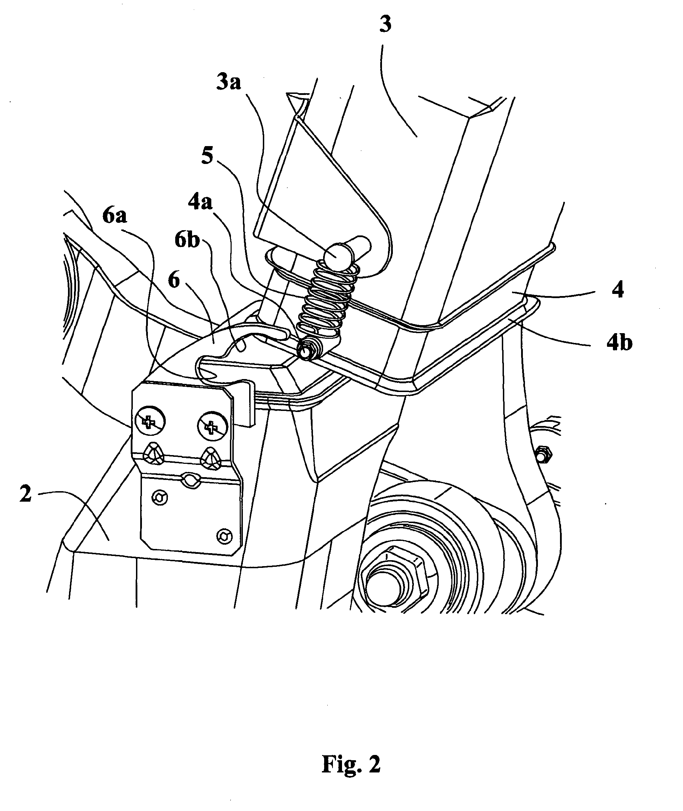

With particular reference to figures 1 and 2, the intake pipe 1, or snorkel, according to this invention comprises at least a first segment of pipe indicated by the reference number 3 and associable to the vehicle cabin, this last one is only schematically represented with some elements in figure 1, and at least a second segment of pipe 4 slidingly and telescopically associated to said first segment of pipe 3. As shown in the figures, the telescopic coupling between the two segments 3 and 4 of the intake pipe is such that the second segment 4 may slide inside the first segment 3. However there may be other equivalent assembling possibilities of the two segments, that are not illustrated here, as they are possible alternative embodiments for the person skilled in the art.

The intake pipe is made substantially by a first segment indicated by the reference number 3 that is associated in a substantially firm way to a part of said vehicle cabin, by a second segment 4 which, as said, is a telescopic extension of said first segment 3, and finally by a third segment 2 which is connected to the vehicle frame. The third segment 2 of the intake pipe is therefore directly associated to the frame, that is to the engine, having to convey the air coming from the segments 2 and 3 to the intake manifold.

Since the industrial vehicle which is the object of this invention, and for which the intake pipe according to this invention is specially made, has a tilt cabin, in order to allow, or better to not to hamper, the tilting of the cabin, the intake pipe that is formed by the segments 2, 3 and 4 substantially has a first segment 3 integral with the tilt cab and a third segment 2 associated to the frame, that is to the engine, of the vehicle.

The first segment of the pipe 3, as said, is telescopically associated to a second segment 4 which is shaped as to slide inside said first segment of pipe 3 between an initial position of maximum extension and a final position of maximum compression. Then, it is this second segment 4 that is associated in a decoupleable way to the second segment of pipe 2 associated to the vehicle frame and that brings fresh air to the engine.

The two segments 2 and 3 of pipe, telescopically associated between each other, are equipped with means suitable for controlling their relative sliding. Said means, in the particular embodiment shown here that is merely illustrative, comprise at least an elastic element 5, in particular a helical spring, suitable for acting between the two points integrally connected respectively to said first 3 and second 4 segment of pipe.

With particular reference to figures 1 and 2, the elastic element, that is the helical spring 5, acts between a pin 3a integral to said first segment of pipe 3 and a pin 4a integral with said second segment of pipe 4. The action of the spring 5 is such that it puts the two pins 3a and 4a in a close reciprocal position, that is it is such that the second segment of pipe 4 penetrates inside the first segment of pipe 3, reducing the overall length of the two segments.

With reference to figure 2, integral with the third segment of pipe 2, there are means for the automatically connection or disconnection of the two segments of the intake pipe, that is of the segment 2 integral with the vehicle frame from the two segments 3 and 4 integral with the vehicle cabin.

Said means for the automatic connection or disconnection may comprise in particular a cam or link-block shown in the figures and indicated by the reference number 6.

Said cam 6 is, as said, integral with the third segment of pipe 2, and is shaped in order to firmly engage, in the specially made groove 6a, the pin 4a integral with the second segment of pipe 4 in certain positions, that will be explained below, of said segment of pipe 4 with respect to the segment of pipe 2, and in order to drive and to hook, by means of the duly shaped segment 6b, the relative sliding of the pin 4a with respect to said cam 5.

The functioning of the intake pipe decoupleable and with variable length according to this invention are explained hereafter more in detail, by describing the sequence of the steps characterizing the opening of the cabin.

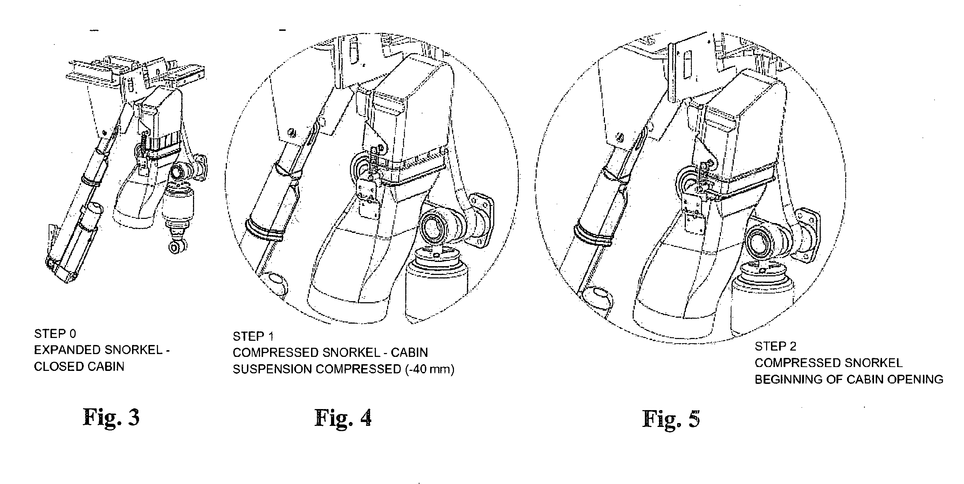

Figures 1 and 3 show the intake pipe, or snorkel, according to this invention in a configuration of maximum overall length of the two segments 3 and 4. This pipe configuration is associated to the vehicle with cabin closed, therefore in running conditions.

When it is necessary to tilt the cabin in order to reach the engine compartment and, more in general, the mechanical organs that are under the cabin, it initially compresses the suspensions placed between the cabin and the frame, and the snorkel according to this invention is partly compressed, as shown in figures 4 and 5, and the second segment 4 penetrates the first segment 3. This shortening of the overall length of the segments 3 and 4 is not due to the action of the spring, but to the compression of the suspensions placed between the cabin and the frame.

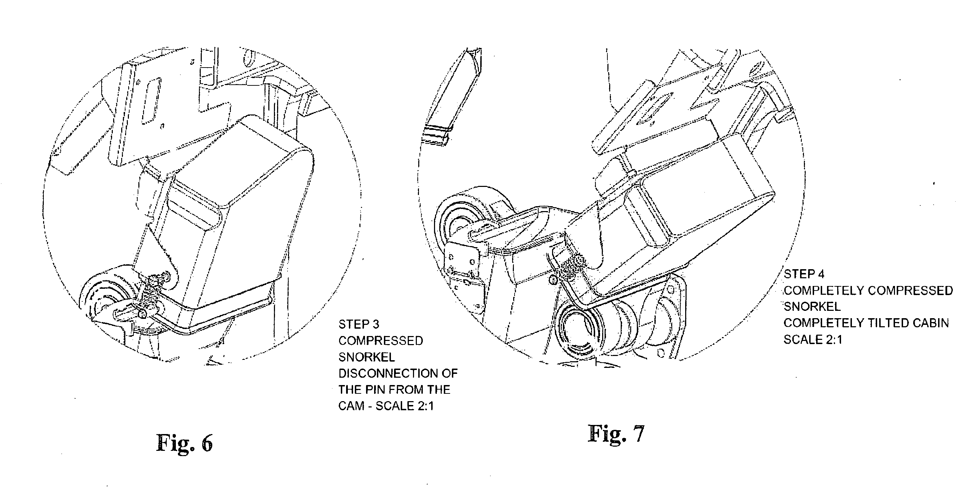

When the cabin starts tilting, its rototranslation movement drags the two segments of pipe 3 and 4 connected to the cabin. In particular, the pin 4a associated to the second segment of pipe 4 goes out of its groove 6a on the cam 6 and, as the cabin tilts, it passes the whole internal profile 6b of the cam 6 until it gets unhooked from it. The situation wherein the pin 4a gets unhooked from cam 6 is shown in figure 2 and in figure 6.

When the pin 4a integral with the second segment of pipe 4 comes out of the extremity of the cam 6, the action of the spring 5, that puts the two pins 3a and 4a in a close reciprocal position, provokes the interpenetration of the two telescopic segments 3 and 4. A lower border 4b is duly placed in the lower part of said second segment of pipe 4 and act as an end of the stroke for the interpenetration of the two segments of pipe 3 and 4, in order to avoid that the spring 5 provokes the full interpenetration of the two segments and gets unhooked from the pins 3a and 4a.

The shortening of the segments 3 and 4 is possible because the second segment of pipe 4 is just set onto the third segment of pipe 2, which remains fixed to the frame, therefore already in the first steps of the cabin tilting the segment 4 moves away by lifting from the pipe 2.

As shown in figures 6 and 7 the rototranslation movement of the cabin with respect to the frame brings the two segments 3 and 4 to move away from the segment 2. The action of the spring 5 has a twofold function: it avoids the second segment of pipe 4 to come out of the first segment of pipe 3 and to fall down, and it also reduces the overall dimensions of the pair of segments 3 and 4, in order to avoid that, during the tilting of the cabin, the pipes 3 and 4 interfere with other frame parts, such as the front bumper which is, in fact, stepped over by the pipes 3 and 4.

Therefore, the pipe according to this invention allows the tilting of the cabin by allowing the segment of pipe associated to the cabin to come off the segment of pipe associated to the frame, in an automatic way, and without any manual intervention by the user.

In the same way, when the cabin is closed, the two segments of pipes 2 and 4 automatically join, restoring the continuity of the intake pipe without any external intervention.

This result is achieved by means of the cam 6 which, with the correct relative positioning and with the correct dimensions of all the elements, automatically hooks the pin 4a when the cabin is closed.

In fact the same steps described for the opening of the cabin are carried out for closing the cabin, the pin 4a integral with the second segment of pipe 4 is hooked by the internal profile 6b of the cam 6. As the cabin is closed the pin 4a slides along the internal profile 6b of the can, and provokes at the same time the telescopic extension of the two segments 3 and 4 of pipe, and the consequent extension of the spring 5, until the initial position in figure 1 is reached again.

Therefore, it has been shown that the intake pipe according to this invention achieves the purpose and the objects proposed.

In particular, it has been shown that the intake pipe according to this invention is particularly compact and, by means of its particular decoupleable structure and its telescopic extension, it solves the problem associated to the presence of the intake pipe during the tilting of the cabin and therefore it is suitable for being mounted inside the engine compartment of the vehicle, avoiding all the drawbacks associated to its positioning outside the pipe.

Also, the intake pipe according to this invention not only has an easier and cheaper construction and maintenance than the pipes of the type known suitable for being placed on the outside, but it is also easier to use during the tilting operation of the cabin, because it does not require any manual intervention both for the decoupling during the opening of the cabin and for the coupling during the closing of the cabin, being fully automatic.

## Claims

1. Intake pipe (1) particularly suitable for being mounted inside the engine compartment of industrial vehicles with tilt cab, comprising at least a first segment (3) connected to said cabin and, telescopically associated to said first segment (3), at least a second segment (4), said second segment (4) of pipe being in its turn decoupleably associated to a third segment (2) of intake pipe connected to the vehicle frame; the intake pipe (1) being **characterized in that** said the second segment (4) is adapted to penetrate and slide inside said first segment (3) of pipe; said first (3) and second (4) segments of pipe associated further comprising means (3a, 4a, 4b, 5) suitable for controlling their relative sliding.

2. Intake pipe (1) according to the previous claim, **characterized in that** said first (3) and second (4) segment of pipe associated between each other in a telescopic way may move between a first position, corresponding to the cabin closed condition, wherein said second segment of pipe (4) is associated to said third segment of pipe (2) integral with the vehicle frame, and a second position, corresponding to the tilted cabin condition, wherein said second segment of pipe (4) is detached from said third segment of pipe (2).

3. Intake pipe (1) according to the previous claim 1 or 2, **characterized in that** said means suitable for controlling the relative sliding of the two segments of pipe telescopically associated (3, 4) comprise at least a pin (3a, 4a) associated integrally with each of said segments of pipe (3, 4), at least an elastic element (5) acting between said pins and suitable for exerting an elastic force tending to put said pins (3a, 4a) in a close reciprocal position.

4. Intake pipe (1) according to any of the claims 3, **characterized in that** said means suitable for controlling the relative sliding of the two segments of pipe telescopically associated (3, 4) also comprise at least a border or striker plate (4b) placed on one of said segments of pipe (3, 4) and suitable for acting as an end of the stroke for the telescopic interpenetration of the two segments of pipe (3, 4).

5. Intake pipe (1) according to any of the previous claims, **characterized in that** there are, in an integral way with said third segment of pipe (2) integral with the vehicle frame, means for the automatic connection and disconnection of the two segments of pipe telescopically associated (3, 4) and integral to the cabin from said third segment of pipe (2) integral with the frame.

6. Intake pipe (1) according to the previous claim, **characterized in that** said means for the automatic connection and disconnection of the segments of pipe (3, 4) integral with the cabin with respect to said segment (2) integral to the frame comprise at least a cam element (6) having an appropriately shaped profile.

7. Intake pipe (1) according to the previous claim, **characterized in that** said cam element (6) has an internal profile appropriately shaped (6b) in order to guide the sliding of the pin (4a) integral with the second segment of pipe (4) during the tilting operations of the cabin.

8. Intake pipe (1) according to the previous claim, **characterized in that** said cam element (6) has shape and dimensions that allow the automatic hooking of said pin (4a) by the cam (6) during the closing operation of the cabin.

9. Intake pipe (1) according to any of the previous claims from 6 to 8, **characterized in that** said cam element (6) further comprises a groove (6a) suitable for firmly holding said pin (4a) of said second segment of pipe (4) when the cabin is in closed position, in order to firmly connect said third segment of pipe (2) and to realize a continuity among the several segments of pipe.

## Patentansprüche

1. Ansaugrohr (1) besonders geeignet zur Montage im Motorraum von Industriefahrzeugen mit Kippkabine, mit zumindest einem ersten Segment (3), das mit der Kabine verbunden ist, und mit zumindest einem teleskopischen mit dem ersten Segment verbundenen zweiten Segment (4), welches zweite Rohrsegment (4) seinerseits mit einem dritten Segment (2) des Ansaugrohrs (1), das mit dem Fahrzeugrahmen verbunden ist, entkuppelbar verbunden ist, **dadurch gekennzeichnet**
- **dass** das zweite Segment (4) dazu ausgebildet ist, in das erste Rohrsegment (3) einzudringen und darin zu gleiten, und
- **dass** das erste (3) und das verbundene zweite (4) Rohrsegment weiter Mittel zur Kontrolle ihres relativen Gleitens aufweisen.

2. Ansaugrohr (1) nach dem voranstehenden Anspruch, **dadurch gekennzeichnet, dass** das erste (3) und das zweite (4) Rohrsegment, die teleskopisch miteinander verbunden sind, sich zwischen einer ersten Position, die dem geschlossenen Zustand der Kabine entspricht, in welcher das zweite Rohrsegment (4) mit dem in den Fahrzeugrahmen integrierten dritten Rohrsegment (2) verbunden ist, und einer zweiten Position, die dem gekippten Zustand der Kabine entspricht bewegen, wobei das zweite Rohrsegment (4) losgelöst vom dritten Rohrsegment (2) ist.

3. Ansaugrohr (1) nach den voranstehenden Ansprüchen 1 oder 2, **dadurch gekennzeichnet, dass** die Mittel zur Kontrolle des relativen Gleitens der teleskopisch verbundenen zwei Rohrsegmente (3, 4) zumindest einen Stift (3a, 4a) aufweisen, der jeweils mit jedem der Rohrsegmente (3, 4) integral verbunden ist, wobei zumindest ein elastisches Element (5) zwischen den Stiften wirkt und geeignet ist, eine elastische Kraft auszuüben, welche die Tendenz hat, die Stifte in eine nahe reziproke Stellung zu bringen.

4. Ansaugrohr (1) nach einem der voranstehenden Ansprüche 3, **dadurch gekennzeichnet, dass** die geeigneten Mittel zur Kontrolle des relativen Gleitens der teleskopisch verbundenen zwei Rohrsegmente (3, 4) zumindest eine Begrenzungs- oder Gegenplatte (4b) aufweisen, die auf einer Seite der Rohrsegmente (3, 4) angeordnet und geeignet ist, als Begrenzung des Hubs des teleskopischen Ineinanderdringens der zwei Rohrsegmente (3, 4) zu dienen.

5. Ansaugrohr (1) nach einem der voranstehenden Ansprüche, **dadurch gekennzeichnet, dass** mit dem in dem Fahrzeugrahmen integrierten dritten Rohrsegment (2) Mittel zur automatischen Verbindung und Loslösung der teleskopisch verbundenen zwei Rohrsegmente (3, 4), die in die Kabine integriert sind, von dem Segment (2), das in den Fahrzeugrahmen integriert ist, in integrierter Weise vorgesehen sind.

6. Ansaugrohr (1) nach dem voranstehenden Anspruch, **dadurch gekennzeichnet, dass** die Mittel zur automatischen Verbindung und Loslösung der Segmente (3, 4), die in die Kabine integriert sind, von dem Segment (2), das in den Fahrzeugrahmen integriert ist, zumindest eine Kurvenscheibe (6) mit einem geeigneten Profil aufweisen.

7. Ansaugrohr (1) nach dem voranstehenden Anspruch, **dadurch gekennzeichnet, dass** die Kurvenscheibe (6) ein inneres Profil aufweist, das geeignet ausgebildet ist, das Gleiten des Stifts (4a), der in das zweite Rohrsegment (4) integriert ist, während des Kippens der Kabine zu führen.

8. Ansaugrohr (1) nach dem voranstehenden Anspruch, **dadurch gekennzeichnet, dass** die Kurvenscheibe (6) eine Form und Abmessungen aufweist, die das automatische Einhaken des Stifts (4a) durch die Kurvenscheibe (6) während des Schließens der Kabine erlauben.

9. Ansaugrohr (1) nach einem der voranstehenden Ansprüche 6 bis 8, **dadurch gekennzeichnet, dass** die Kurvenscheibe (6) eine Nut (6a) aufweist, die geeignet ist, den Stift (4a) des zweiten Rohrsegments (4) festzuhalten, wenn die Kabine in der geschlossenen Stellung ist, um das dritte Rohrsegment (2) fest zu verbinden und um eine Durchgängigkeit zwischen den mehreren Rohrsegmenten (2, 3, 4) herzustellen.

## Revendications

1. Tuyau d'admission (1) particulièrement apte à être monté à l'intérieur du compartiment moteur de véhicules industriels pourvus d'une cabine à inclinaison, comprenant au moins un premier segment (3) branché à ladite cabine et, associé de manière télescopique au dit premier segment (3), au moins un deuxième segment (4), ledit deuxième segment (4) du tuyau étant à son tour associé, de manière à pouvoir être découplé, à un troisième segment (2) du tuyau d'admission branché au châssis de véhicule ; le tuyau d'admission (1) étant **caractérisé en ce que** ledit deuxième segment (4) est apte à pénétrer et à coulisser à l'intérieur dudit premier segment (3) du tuyau ; ledit premier segment (3) et ledit deuxième segment (4) de tuyau associés comprenant en outre des moyens (3a, 4a, 4b, 5) aptes à commander leur coulissement relatif.

2. Tuyau d'admission (1) selon la revendication précédente, **caractérisé en ce que** ledit premier segment (3) et ledit deuxième segment (4) de tuyau associés l'un à l'autre d'une manière télescopique peuvent se déplacer entre une première position correspondant à l'état fermé de cabine, dans lequel ledit deuxième segment de tuyau (4) est associé au dit troisième segment de tuyau (2) faisant partie intégrante du châssis de véhicule, et une deuxième position, correspondant à l'état incliné de cabine, dans lequel ledit deuxième segment de tuyau (4) est détaché dudit troisième segment de tuyau (2).

3. Tuyau d'admission (1) selon la revendication 1 ou 2, **caractérisé en ce que** lesdits moyens aptes à commander le coulissement relatif des deux segments de tuyau (3, 4) associés de manière télescopique comprend au moins une broche (3a, 4a) associée de manière intégrante à chacun desdits segments de tuyau (3, 4), au moins un élément élastique (5) agissant entre lesdites broches et apte à exercer une force élastique tendant à mettre lesdites broches (3a, 4a) à une position réciproque fermée.

4. Tuyau d'admission (1) selon la revendication 3, **caractérisé en ce que** lesdits moyens aptes à commander le coulissement relatif des deux segments de tuyau (3, 4) associés de manière télescopique comprend également au moins une plaque de bordure ou de butée (4b) placée sur l'un desdits segments de tuyau (3, 4) et apte à agir en tant que fin de la course pour l'interpénétration télescopique des deux segments de tuyau (3, 4).

5. Tuyau d'admission (1) selon l'une quelconque des revendications précédentes, **caractérisé en ce qu'**il y a, d'une manière intégrante avec ledit troisième segment de tuyau (2) faisant partie intégrante du châssis de véhicule, des moyens de branchement et de débranchement automatique des deux segments de tuyau (3, 4) associés de manière télescopique et faisant partie intégrante de la cabine à partir dudit troisième segment de tuyau (2) faisant partie intégrante du châssis.

6. Tuyau d'admission (1) selon la revendication précédente, **caractérisé en ce que** lesdits moyens de branchement et de débranchement automatique des segments de tuyau (3, 4) faisant partie intégrante de la cabine par rapport au dit segment (2) faisant partie intégrante du châssis comprend au moins un élément de came (6) ayant un profil de forme approprié.

7. Tuyau d'admission (1) selon la revendication précédente, **caractérisé en ce que** ledit élément de came (6) a un profil interne de forme appropriée (6b) pour guider le coulissement de la broche (4a) faisant partie intégrante du deuxième segment de tuyau (4) au cours des opérations d'inclinaison de la cabine.

8. Tuyau d'admission (1) selon la revendication précédente, **caractérisé en ce que** ledit élément de came (6) a une forme et des dimensions permettant l'accrochage automatique de ladite broche (4a) par la came (6) au cours de l'opération de fermeture de la cabine.

9. Tuyau d'admission (1) selon l'une quelconque des revendications 6 à 8, **caractérisé en ce que** ledit élément de came (6) comprend en outre une rainure (6a) apte à maintenir fermement ladite broche (4a) dudit deuxième segment de tuyau (4) lorsque la cabine est à la position fermée, afin de brancher fermement ledit troisième segment de tuyau (2) et de réaliser une continuité parmi les divers segments de tuyau.
